# FASCICULE DE BREVET EUROPEEN

(11) **EP 3 067 256 B1**
(45) Date de publication et mention de la délivrance du brevet: **25.10.2017**
(21) Numéro de dépôt: 15198645.2
(22) Date de dépôt: 09.12.2015
(51) Int. Cl.: B62D 43/04, B60J 5/10, B62D 25/12

(54) **CAISSE DE VEHICULE AUTOMOBILE MUNIE D'UN RENFORT DE FIXATION AU PLANCHER ARRIERE D'UNE TIGE DE RETENUE D'UN PANIER DE ROUE DE SECOURS ET D'UNE GACHE DE VERROUILLAGE D'UN VOLET ARRIERE**
KAROSSERIE EINES KRAFTFAHRZEUGS, DIE MIT EINER BEFESTIGUNGSVERSTÄRKUNG AM HECKBODEN MITHILFE EINER HALTERUNGSSTANGE FÜR EINE RESERVERAD-WANNE UND EINEM SCHLIESSBÜGEL EINER HECKKLAPPE AUSGESTATTET IST
MOTOR VEHICLE BODY FITTED WITH A REINFORCEMENT FOR ATTACHING TO THE REAR FLOOR OF A RETAINING PIN OF A SPARE WHEEL BASKET AND A LOCKING STRIKE OF A REAR FLAP

(30) Priorité: 16.01.2015 FR 1550355
(43) Date de publication de la demande: 14.09.2016
(73) Titulaire: PSA Automobiles SA, 78300 Poissy (FR)
(72) Inventeur: ARNAUD, Laurent, 70110 SENARGENT MIGNAFANS (FR)
(74) Mandataire: Fosse, Danièle

(56) Documents cités:
- EP-A1- 0 064 925
- EP-A1- 0 697 327
- FR-A1- 2 860 023
- FR-A1- 2 918 402
- FR-A1- 2 925 426
- JP-U- S56 385
- JP-U- S58 164 979

## Description

La présente invention est du domaine des véhicules automobiles et relève plus spécifiquement des dispositifs de fixation d'une roue de secours sous la caisse d'un véhicule automobile.

Les véhicules automobiles comportent classiquement une caisse ménageant essentiellement un habitacle et un compartiment moteur. La caisse est principalement formée d'un châssis sur lequel sont notamment montés un plancher, potentiellement composé d'un ou de plusieurs panneaux, et une ossature porteuse, au moins en partie, d'organes fonctionnels du véhicule.

Parmi les organes fonctionnels montés au moins en partie sur l'ossature, il est par exemple à relever des éléments et/ou des ensembles de carrosserie montés fixes sur l'ossature et/ou sur le plancher. Il est par exemple encore à relever que de tels organes fonctionnels comprennent des organes mobiles entre deux positions, dont une première position exploitable en situation d'arrêt du véhicule et une deuxième position au moins exploitable en situation de progression du véhicule, voire aussi en situation d'arrêt du véhicule. De tels organes mobiles sont par exemple des volets procurant un accès entre l'extérieur et l'intérieur de la caisse, et/ou divers accessoires équipant le véhicule. Le document FR2925426 A1 est considéré comme l'art antérieur le plus proche. Il se pose le problème général de la sécurisation du verrouillage sur la caisse des organes mobiles placés dans ladite deuxième position, notamment en situation de progression du véhicule. En effet dans ladite deuxième position, les organes mobiles ne doivent induire aucune gêne vis-à-vis de la progression du véhicule et à cet effet doivent être fermement maintenus sur la caisse dans leur deuxième position, pour interdire tout risque de leur passage vers la première position.

Dans le contexte spécifique de la présente invention, il est notamment pris en considération :
-) un composant de la caisse formé d'un plancher arrière. Un tel plancher arrière est typiquement identifié relativement à la position d'un plancher avant s'étendant au moins en partie dans une zone avant de la caisse dans laquelle est aménagé un poste de conduite du véhicule.
-) au moins un volet arrière, tel qu'un volet roulant ou un volet articulé sur l'ossature, formant une porte d'accès à un compartiment arrière de la caisse. Un tel compartiment arrière ménage couramment un espace de rangement, tel qu'agencé en coffre par exemple. Ledit au moins un volet arrière est un organe mobile entre une position d'ouverture procurant un accès au compartiment arrière depuis l'extérieur de la caisse et une position de fermeture dans laquelle le volet arrière clôture un tel accès au compartiment arrière.
-) un accessoire du véhicule formé d'un panier de rangement d'une roue de secours disposé sous la caisse, en dessous du plancher arrière. Les notions de « sous » et de « en dessous », et par suite les notions de « élévation », « supérieur » et « inférieur » sont comprises tel que classiquement au regard de l'orientation et par suite de la direction d'extension verticale de la caisse disposée conformément à la station de roulage du véhicule. Ledit panier est un organe articulé sur la caisse sous le plancher arrière, en étant mobile entre une position rabattue vers le plancher arrière et une position basculée, notamment vers le sol, procurant à un opérateur un accès à la roue de secours.

Dans un tel contexte et tenant compte dudit problème général posé relatif à la sécurisation du verrouillage sur la caisse des organes mobiles dans ladite deuxième position, il se pose les problèmes spécifiques relatifs au maintien ferme du volet arrière en position de fermeture et du panier de rangement de la roue de secours en position rabattue vers et sous le plancher arrière.

Plus particulièrement en ce qui concerne ledit au moins un volet arrière, celui-ci est potentiellement articulé sur la caisse en basculement autour d'un axe géométrique sensiblement orienté parallèlement au plan d'extension générale du plancher arrière et plus spécifiquement autour d'un axe géométrique s'étendant transversalement à la caisse.

Ledit au moins un volet arrière est encore potentiellement articulé sur la caisse en pivotement autour d'un axe géométrique sensiblement orienté perpendiculairement au plan d'extension générale du plancher arrière et plus spécifiquement autour d'un axe géométrique s'étendant sensiblement en bordure d'un quelconque bord latéral arrière de la caisse.

Ledit au moins un volet arrière est encore potentiellement agencé en volet roulant monté fixe sur la caisse et mobile sur lui-même entre une position enroulée au moins partiellement, procurant un accès au compartiment arrière, et une position déployée clôturant ledit accès au compartiment arrière.

La notion de « transversal » est communément identifiée comme relevant d'une orientation s'étendant entre les côtés latéraux du véhicule, relativement à la notion de « longitudinal » identifiée comme relevant d'une orientation s'étendant entre l'avant et l'arrière de la caisse conformément aux notions « avant » et « arrière » précédemment définies. Par suite, la notion de « latéral » est bien évidemment comprise au regard des côtés de la caisse s'étendant longitudinalement entre l'avant et l'arrière de la caisse conformément aux notions « avant » et « arrière » précédemment définies.

Pour verrouiller le maintien du volet arrière en position de fermeture, il est couramment utilisé une serrure comprenant une gâche implantée sur la face supérieure du plancher arrière et coopérant avec un loquet implanté sur le volet arrière.

Pour sécuriser la fixation de la gâche au plancher arrière, la gâche est montée sur un renfort lui-même fixé au plancher arrière et plus spécifiquement fixé sensiblement en bordure du bord arrière du plancher arrière. La fixation de la gâche au renfort d'une part et la fixation du renfort au plancher arrière d'autre part, sont classiquement réalisées au moyen d'organes de fixation, tels qu'agencés en vis ou en boulons, ou par soudage.

Le renfort est couramment agencé en une platine prenant verticalement appui contre la face supérieure du plancher arrière et pouvant comporter en élévation plusieurs paliers. Par exemple, un palier supérieur du renfort reçoit la gâche et au moins un palier inférieur du renfort est placé en appui vertical contre la face supérieure du plancher arrière.

Le plancher arrière comporte couramment à sa face supérieure une alvéole de réception du renfort, la gâche étant disposée à sa base en affleurement de la face supérieure du plancher arrière en s'élevant au-dessus du plancher arrière dans un environnement dégagé autorisant la mise en coopération entre la gâche et le loquet implanté sur le volet arrière.

A propos des modalités de verrouillage du volet arrière en position de fermeture sur la caisse par l'intermédiaire d'une gâche rapportée sur un renfort de fixation au plancher arrière de la caisse, on pourra par exemple se reporter au document FR 2 925 426 (PEUGEOT CITROEN AUTOMOBILES SA).

Plus particulièrement en ce qui concerne ledit panier de rangement d'une roue de secours disposé sous le plancher arrière, un tel panier est couramment formé d'un corps en fils d'acier ménageant une cage de réception de la roue de secours. La cage est munie de branches par l'intermédiaire desquelles le panier est articulé en basculement sur la caisse entre ladite position rabattue vers la face inférieure du plancher arrière et ladite position basculée autorisant un accès à la roue de secours par un opérateur depuis l'extérieur de la caisse.

Le panier est équipé d'un dispositif à crochet, de structure plus ou moins complexe, procurant l'arrimage du panier en position rabattue vers la face inférieure du plancher arrière. Le dispositif à crochet comporte un organe de saisie par crochetage d'une extrémité libre du panier, couramment opposée à une extrémité de montage articulé du panier sur la caisse.

Le dispositif à crochet est classiquement monté sur la caisse par l'intermédiaire d'une tige d'arrimage épaulée traversant le plancher arrière en prenant appui contre sa face supérieure, la tige d'arrimage supportant le dispositif à crochet auquel la tige d'arrimage est fixée, par vissage notamment.

Ladite tige d'arrimage constitue potentiellement un organe de manoeuvre du dispositif à crochet pour sélectivement placer le panier en prise avec l'organe de saisie ou inversement libérer le panier vis-à-vis de sa prise par l'organe de saisie.

Isolément ou en combinaison avec les dispositions précédentes, le dispositif à crochet est potentiellement équipé d'un organe de commande de son fonctionnement entre la prise qu'il exerce sur le panier par l'intermédiaire de l'organe de saisie et la libération du panier autorisant son basculement vers le sol en position basculée, pour procurer l'accès à la roue de secours par un opérateur.

A propos des modalités de montage en mobilité d'un panier de rangement d'une roue de secours disposé sous la caisse, au moins partiellement en dessous du plancher arrière, on pourra par exemple se reporter au document EP 0 697 327 (PEUGEOT CITROEN SA).

Il est apparu à l'usage que les modalités de sécurisation du verrouillage sur la caisse du panier de rangement de la roue de secours méritaient d'être améliorées.

Une telle amélioration s'inscrit sous la contrainte d'une recherche constante dans le domaine de l'automobile de réduire les coûts d'obtention des véhicules et d'allègement de leur structure.

La présente invention a pour objet une caisse de véhicule automobile équipée d'un panier de rangement d'une roue de secours, ledit panier étant articulé en basculement sous la caisse en étant disposé sous un plancher arrière et en étant retenu à l'encontre de son basculement par un dispositif à crochet arrimé à la caisse par une tige d'arrimage traversant le plancher arrière.

La présente invention a aussi pour objet un véhicule automobile comportant une telle caisse.

Le but visé par la présente invention est de procurer une sécurisation optimisée du maintien par le dispositif à crochet du panier en position rabattue vers le plancher arrière, plus particulièrement en ce qui concerne le montage sur la caisse de la tige d'arrimage traversant le plancher arrière.

Sur la base du constat qui vient d'être fait et du cheminement descriptif de l'art antérieur, la démarche de la présente invention réside essentiellement dans une exploitation du renfort sur lequel est montée une gâche de verrouillage sur la caisse d'un volet arrière en position de fermeture, pour renforcer la prise d'appui vertical de la tige d'arrimage sur le plancher arrière et par suite pour renforcer le montage sur la caisse du dispositif à crochet confortant la fermeté du maintien du panier en position rabattue vers le plancher arrière.

Conformément à une telle démarche, il est proposé par la présente invention d'accroître l'extension du renfort sur lequel est montée ladite gâche, pour ménager une partie dudit renfort dédiée à la prise d'appui vertical de la tige d'arrimage contre la face supérieure du plancher arrière.

Il ressort de ces dispositions que la prise d'appui vertical de la tige d'arrimage contre le plancher arrière et par suite la fixation du dispositif à crochet sur la caisse s'en trouvent renforcées, tout en réduisant le nombre de pièces mises en oeuvre et par suite tout en simplifiant les modalités de montage sur le plancher arrière à la fois de la gâche et de la tige d'arrimage.

Ainsi, la caisse de véhicule automobile de la présente invention comporte au moins un plancher arrière et est munie d'une part d'un panier de rangement d'une roue de secours disposé sous la caisse et d'autre part d'au moins un volet arrière de clôture d'un compartiment arrière de la caisse.

Plus particulièrement, ledit panier est monté pivotant sur la caisse en étant mobile en basculement entre une position rabattue vers la face inférieure du plancher arrière et une position basculée dans laquelle la roue de secours est accessible depuis l'extérieur de la caisse. Le panier est maintenu en ladite position rabattue par un dispositif à crochet fixé au plancher arrière par une tige d'arrimage reliée à l'une de ses extrémités au dispositif à crochet et prenant axialement appui à son autre extrémité, par l'intermédiaire d'un épaulement de la tige d'arrimage, contre la face supérieure du plancher arrière traversé par la tige d'arrimage.

Plus particulièrement encore, ledit volet arrière est mobile entre une position d'ouverture autorisant un accès depuis l'extérieur de la caisse audit compartiment arrière et une position de fermeture dans laquelle le volet arrière clôture ledit compartiment arrière. Le volet arrière est maintenu sur la caisse en position de fermeture par l'intermédiaire d'une serrure comprenant une gâche et un loquet coopérant. La gâche est implantée à la face supérieure du plancher arrière et le loquet est implanté sur le volet arrière. La gâche est plus spécifiquement implantée à la face supérieure du plancher arrière par l'intermédiaire d'un renfort, qualifié principal, d'extension générale plane et fixé au plancher arrière dans son plan général d'extension.

On relèvera que le panier est notamment constitué, tel que classiquement, d'un corps en fils d'acier ménageant une cage de réception de la roue de secours, ladite cage étant munie de branches par l'intermédiaire desquelles le panier est monté basculant sur la caisse. On relèvera aussi que le volet arrière est potentiellement formé indifféremment :
-) d'au moins un panneau articulé sur la caisse autour d'un axe de pivotement orienté transversalement à la caisse en étant monté en basculement vertical, ou
-) d'au moins un panneau articulé sur la caisse autour d'un axe de pivotement orienté verticalement sur la caisse en étant monté en basculement latéral, ou
-) d'un volet roulant fixé en zone supérieure de la caisse et déployable verticalement en position de fermeture vers la zone inférieure de la caisse.

Dans ce contexte connu, la caisse de la présente invention est principalement reconnaissable en ce que le renfort principal intègre une aile contre laquelle la tige d'arrimage prend axialement appui par l'intermédiaire dudit épaulement, ladite aile formant un renfort, qualifié secondaire, de fixation du dispositif à crochet sur la caisse.

Plus particulièrement, l'aile est de préférence ménagée, dans le plan général d'extension du renfort principal, en prolongement d'un socle sur lequel la gâche est fixée.

Le renfort principal est préférentiellement logé dans une alvéole du plancher arrière. Considérant le plan général d'extension du renfort principal, la dimension en élévation du socle est supérieure à la dimension en élévation de l'aile.

La face supérieure du socle recevant la gâche et la face supérieure de l'aile recevant l'épaulement de la tige d'arrimage sont de préférence sensiblement coplanaires.

Selon une forme de réalisation, l'aile comporte une empreinte à l'intérieur de laquelle est logé l'épaulement de la tige d'arrimage.

Selon une variante, ladite alvéole reçoit le socle en son fond et comporte un palier de réception de l'aile.

La tige d'arrimage est par exemple reliée par vissage au dispositif à crochet et comporte un organe d'entraînement en rotation sur elle-même ménagé sur ledit épaulement en étant accessible depuis l'intérieur dudit compartiment arrière.

Dans ce contexte, la tige d'arrimage constitue potentiellement non seulement un organe de fixation du dispositif à crochet au plancher arrière mais aussi un organe de manoeuvre du dispositif à crochet provoquant le basculement du panier entre ladite position rabattue et ladite position basculée.

L'aile est avantageusement intégrée de fabrication au renfort principal lors de sa mise en conformation.

Un véhicule automobile conforme à la présente invention comporte une caisse telle qu'elle vient d'être décrite.

Il ressort des dispositions qui viennent d'être décrites :
-) que la fixation au plancher arrière du dispositif à crochet par l'intermédiaire de la tige d'arrimage est renforcée et par suite que la sécurisation et la fermeté du maintien du panier par le dispositif à crochet en position rabattue sont confortées, indépendamment de l'agencement de la structure du dispositif à crochet,
-) que les renforcements individuels des fixations sur le plancher arrière de la gâche et de la tige d'arrimage sont réalisés à partir d'une même pièce mécanique,
-) que le nombre d'organes exploités pour fixer au plancher supérieur d'une part la gâche et d'autre part la tige d'arrimage est restreint vis-à-vis d'une exploitation d'un renfort principal de fixation de la gâche au plancher arrière et d'un renfort secondaire de prise d'appui de la tige d'arrimage contre le plancher arrière, respectivement formés de pièces mécaniques distinctes,
-) que les nombres d'opérations et de gabarits de montage nécessaires à l'implantation de renforts de fixation au plancher arrière respectivement de la gâche et de la tige d'arrimage sont limités.

Il en ressort que non seulement la sécurisation de l'arrimage du dispositif à crochet au plancher arrière est confortée lors de la progression du véhicule automobile, mais aussi qu'une telle sécurisation est obtenue en limitant les coûts induits de production du véhicule automobile.

Un exemple de réalisation de la présente invention va être décrit en relation avec les figures des planches annexées, dans lesquelles :
La fig.1 est une illustration du contexte dans lequel s'inscrit la présente invention.
La fig.2 est un détail de la fig.1 illustrant des modalités de montage selon l'art antérieur d'une gâche et d'une tige d'arrimage d'un dispositif à crochet sur un plancher arrière d'une caisse de véhicule automobile.
La fig.3 est une illustration d'une forme de réalisation de la présente invention procurant un renfort de fixation sur un plancher arrière d'une caisse de véhicule automobile d'une gâche et d'une tige d'arrimage d'un dispositif à crochet.

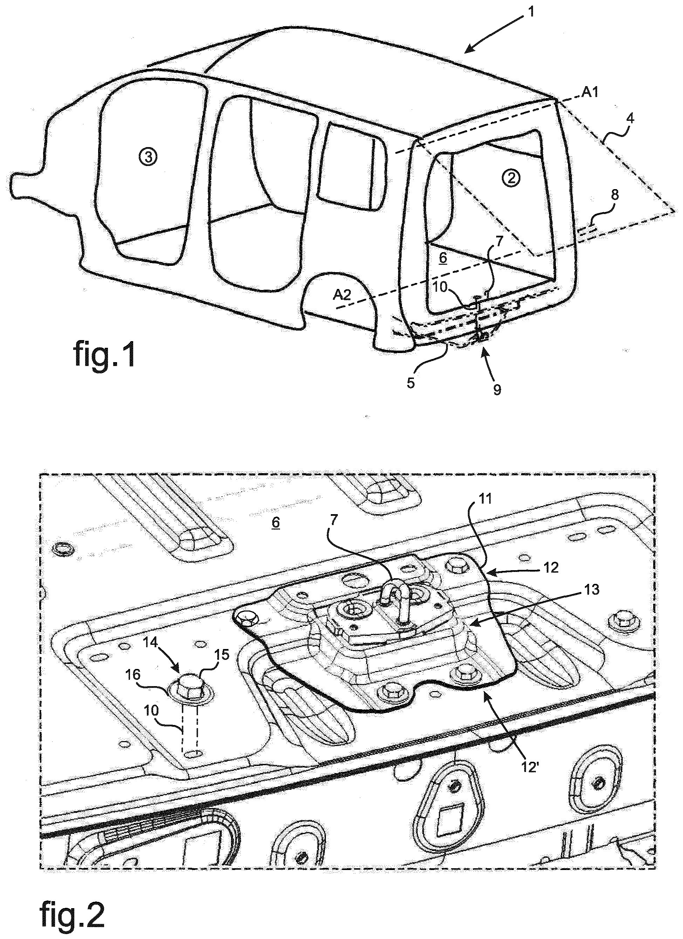

Sur la fig.1, une caisse 1 de véhicule automobile ménage un habitacle comportant un compartiment arrière 2 disposé longitudinalement à l'opposé d'un compartiment avant 3 ménageant un poste de conduite du véhicule automobile.

La caisse 1 est munie d'un volet arrière 4 de clôture dudit compartiment arrière 2 et d'un panier 5 de rangement d'une roue de secours disposé sous la caisse 1 et plus spécifiquement au moins en partie sous un plancher arrière 6 de la caisse 1.

Sur l'exemple de réalisation illustré, le volet arrière 4 est formé d'un panneau monté pivotant sur la caisse 1 dans sa zone supérieure, autour d'un premier axe géométrique A1 orienté suivant la dimension d'extension transversale de la caisse 1. Le volet arrière 4 est manoeuvrable entre une position d'ouverture autorisant un accès au compartiment arrière 2 depuis l'extérieur de la caisse 1, tel qu'illustré, et une position de fermeture dans laquelle le volet arrière 4 clôture le compartiment arrière 2.

Une serrure 7,8 procure un verrouillage du volet arrière 4 en position de fermeture sur la caisse 1, et plus particulièrement sur le plancher arrière 6. Une telle serrure comprend une gâche 7 fixée à la face supérieure du plancher arrière 6 et coopérant avec un loquet 8 implanté sur le volet arrière 4.

Toujours selon l'exemple de réalisation illustré, ledit panier 5 est formé d'un corps en fil d'acier monté pivotant sous la caisse 1 autour d'un deuxième axe géométrique A2 orienté suivant la dimension d'extension transversale de la caisse 1. Le panier 5 est mobile en basculement entre une position rabattue vers la face inférieure du plancher arrière 6, tel qu'illustré, et une position basculée vers le sol dans laquelle la roue de secours est accessible par un opérateur depuis l'extérieur de la caisse 1.

Le panier 5 est maintenu en position rabattue par un dispositif à crochet 9 fixé à la caisse 1, et plus particulièrement au plancher arrière 6, par l'intermédiaire d'une tige d'arrimage 10 traversant le plancher arrière 6. Un tel dispositif à crochet 9 comporte un organe de saisie par crochetage d'une extrémité libre du panier 5 opposée à son extrémité articulée sur la caisse 1.

Plus particulièrement, la tige d'arrimage 10 prend axialement appui contre la face supérieure du plancher arrière 6 et est reliée à son extrémité inférieure au dispositif à crochet 9, par vissage notamment. Par exemple, une telle liaison par vissage est réalisée en ménageant un filetage à l'extrémité inférieure de la tige d'arrimage 10 coopérant avec un filetage complémentaire ménagé sur un organe du dispositif à crochet 9 coopérant avec la tige d'arrimage 10.

Sur la fig.2 conformément à un art antérieur connu, la gâche 7 est montée à la face supérieure du plancher arrière 6 par l'intermédiaire d'un renfort 11.

Selon cet art antérieur connu, un tel renfort 11 de l'art antérieur est typiquement agencé en une platine d'extension générale plane comportant en élévation différents paliers. Au moins un premier palier 12 du renfort 11 est maintenu plaqué par vissage ou par soudage contre la face supérieure du plancher arrière 6, tandis que la gâche 7 est implantée par vissage ou par soudage sur un deuxième palier 13 du renfort 11.

Par ailleurs toujours selon cet art antérieur connu, la tige d'arrimage 10 prend verticalement appui contre la face supérieure du plancher arrière 6 à proximité du renfort 11. La tige d'arrimage 10 comporte à cet effet une tête ménageant un épaulement 14 par l'intermédiaire duquel la tige d'arrimage 10, coopérant avec le dispositif à crochet, est maintenue plaquée contre la face supérieure du plancher arrière 6.

Pour permettre à un opérateur d'effectuer la liaison par vissage de la tige d'arrimage 10 avec le dispositif à crochet, la tige d'arrimage 10 comporte un organe d'entraînement 15 en rotation sur elle-même. Sur l'exemple illustré, un tel organe d'entraînement 15 est formé par un agencement de l'épaulement 14 en tête de conformation polygonale.

Subsidiairement pour conforter l'assise prise par l'épaulement 14 contre le plancher arrière 6, la tige d'arrimage 10 est potentiellement équipée d'une rondelle 16 placée en interposition entre l'épaulement 14 et la face supérieure du plancher arrière 6. Une telle rondelle 16 est potentiellement déformable sous l'effet du plaquage de l'épaulement 14 contre le plancher arrière 6 à l'encontre de la traction exercée sur la tige d'arrimage 10 par suite de sa liaison par vissage avec le dispositif à crochet en prise sur le panier.

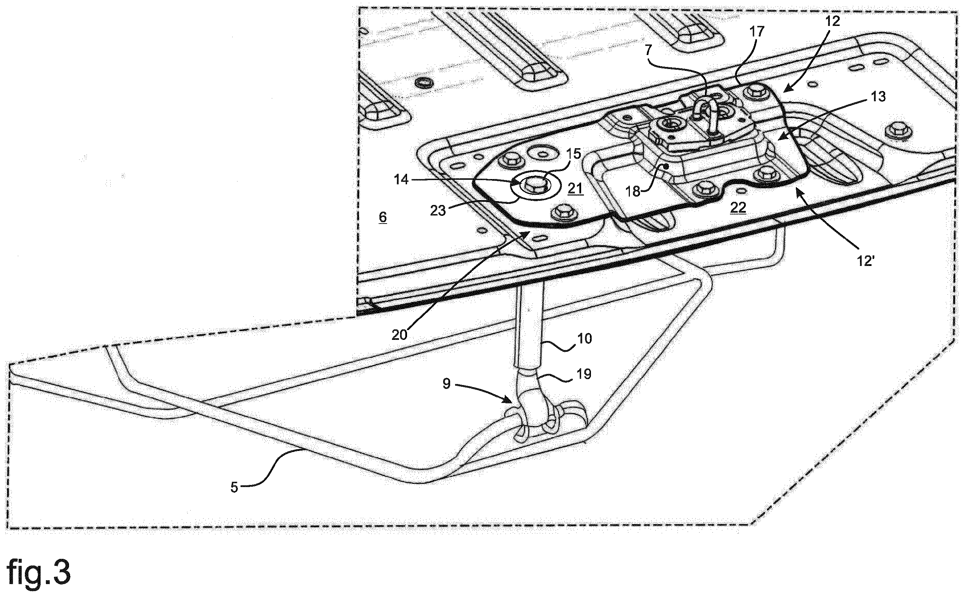

La fig.3 illustre un exemple de réalisation de la présente invention dans le contexte illustré sur la fig.1.

A la manière de l'art antérieur connu représenté sur la fig.2, la gâche 7 est montée à la face supérieure du plancher arrière 6 par l'intermédiaire d'un renfort principal 17 conforme à la présente invention et la tige d'arrimage 10 prend verticalement appui contre la face supérieure du plancher arrière 6 à proximité du renfort principal 17.

Le renfort principal 17 est classiquement agencé en une platine d'extension générale plane comportant en élévation différents paliers 12, 12', 13. Au moins un premier palier 12, 12' du renfort principal 17 est maintenu plaqué par vissage contre la face supérieure du plancher arrière 6, tandis que la gâche 7 est implantée par vissage sur un deuxième palier 13 du renfort principal 17 formant un socle 18 de réception de la gâche 7.

Par ailleurs et toujours pour rappel, la tige d'arrimage 10 comporte une tête ménageant un épaulement 14 par l'intermédiaire duquel la tige d'arrimage 10, coopérant par vissage avec un organe de jonction 19 équipant à cet effet le dispositif à crochet 9, est maintenue plaquée contre la face supérieure du plancher arrière 6. A cet effet, la tige d'arrimage 10 comporte un organe d'entraînement 15 en rotation sur elle-même, notamment formé par un agencement de l'épaulement 14 en tête de conformation polygonale tel que sur l'exemple de réalisation illustré.

Dans un tel contexte, la présente invention propose d'équiper la tige d'arrimage 10 d'un renfort secondaire 20. Un tel renfort secondaire 20 est formé par une aile 21 intégrée au renfort principal 17 à partir d'un prolongement du renfort principal 17 depuis le socle 18 vers la tige d'arrimage 10. Ledit prolongement du renfort principal 17 est notamment formé par une extension d'au moins un dit premier palier 12 du renfort principal 17 prenant appui contre la face supérieure du plancher arrière 6.

La tige d'arrimage 10 prend appui au moyen de l'épaulement 14 qu'elle comporte par l'intermédiaire de l'aile 21 interposée entre l'épaulement 14 et la face supérieure du plancher arrière 6.

Le renfort principal 17, intégrant l'aile 21, est logé dans une alvéole 22 ménagée dans le plancher arrière 6. Bien entendu, une telle alvéole 22 débouche à la face supérieure du plancher arrière 6. Dans ce contexte, la dimension en élévation du socle 18 est supérieure à la dimension en élévation en élévation de l'aile 21, la notion d'élévation étant à considérer vis-à-vis du plan général d'extension du renfort principal 17.

Plus particulièrement, ladite alvéole 22 reçoit le socle 18 en son fond et comporte un palier de réception de l'aile 21, la face supérieure du socle 18 recevant la gâche 7 et la face supérieure de l'aile 21 recevant l'épaulement 14 de la tige d'arrimage 10 étant sensiblement coplanaires.

Pour éviter une gêne potentiellement occasionnée par une saillie en élévation de l'épaulement 14 de la tige d'arrimage 10 par rapport au plan général du plancher arrière 6 considéré à sa face supérieure, l'aile 21 comporte si besoin une empreinte 23 à l'intérieur de laquelle est logé l'épaulement 14 de la tige d'arrimage 10.

## Revendications

1. Caisse (1) de véhicule automobile comportant au moins un plancher arrière (6), ladite caisse (1) étant munie :
-) d'un panier (5) de rangement d'une roue de secours disposé sous la caisse (1), ledit panier (5) étant monté pivotant sur la caisse (1) en étant mobile en basculement entre une position rabattue vers la face inférieure du plancher arrière (6) et une position basculée dans laquelle la roue de secours est accessible depuis l'extérieur de la caisse (1), le panier (5) étant maintenu en ladite position rabattue par un dispositif à crochet (9) fixé au plancher arrière (6) par une tige d'arrimage (10) reliée à l'une de ses extrémités au dispositif à crochet (9) et prenant axialement appui à son autre extrémité, par l'intermédiaire d'un épaulement (14) de la tige d'arrimage (10), contre la face supérieure du plancher arrière (6) traversé par la tige d'arrimage (10),
-) d'au moins un volet arrière (4) mobile entre une position d'ouverture, autorisant un accès depuis l'extérieur de la caisse (1) à un compartiment arrière (2) de la caisse (1), et une position de fermeture dans laquelle le volet arrière (4) clôture ledit compartiment arrière (2), le volet arrière (4) étant maintenu sur la caisse (1) en position de fermeture par l'intermédiaire d'une serrure comprenant une gâche (7) implantée à la face supérieure du plancher arrière (6) et un loquet (8) implanté sur le volet arrière (4), la gâche (7) étant implantée à la face supérieure du plancher arrière (6) par l'intermédiaire d'un renfort (17), qualifié principal, d'extension générale plane et fixé au plancher arrière (6) dans son plan général d'extension,
**caractérisée en ce que** le renfort principal (17) intègre une aile (21) contre laquelle la tige d'arrimage (10) prend axialement appui par l'intermédiaire dudit épaulement (14), ladite aile (21) formant un renfort (20), qualifié secondaire, de fixation du dispositif à crochet (9) sur la caisse (1).

2. Caisse (1) de véhicule automobile selon la revendication 1, **caractérisée en ce que** l'aile (21) est ménagée, dans le plan général d'extension du renfort principal (17), en prolongement d'un socle (18) sur lequel la gâche (7) est fixée.

3. Caisse (1) de véhicule automobile selon la revendication 2, **caractérisée en ce que**, le renfort principal (17) étant logé dans une alvéole (22) du plancher arrière (6) et considérant le plan général d'extension du renfort principal (17), la dimension en élévation du socle (18) est supérieure à la dimension en élévation de l'aile (21).

4. Caisse (1) de véhicule automobile selon la revendication 3, **caractérisée en ce que**, la face supérieure du socle (18) recevant la gâche (7) et la face supérieure de l'aile (21) recevant l'épaulement (14) de la tige d'arrimage (10) sont sensiblement coplanaires.

5. Caisse (1) de véhicule automobile selon la revendication 4, **caractérisée en ce que** l'aile (21) comporte une empreinte (23) à l'intérieur de laquelle est logé l'épaulement (14) de la tige d'arrimage (10).

6. Caisse (1) de véhicule automobile selon la revendication 4, **caractérisée en ce que** ladite alvéole (22) reçoit le socle (18) en son fond et comporte un palier de réception de l'aile (21).

7. Caisse (1) de véhicule automobile selon l'une quelconque des revendications 1 à 6, **caractérisée en ce que** la tige d'arrimage (10) est reliée par vissage au dispositif à crochet (9) et comporte un organe d'entraînement (15) en rotation sur elle-même ménagé sur ledit épaulement (14) en étant accessible depuis l'intérieur dudit compartiment arrière (2).

8. Caisse (1) de véhicule automobile selon la revendication 7, **caractérisée en ce que** la tige d'arrimage (10) constitue non seulement un organe de fixation du dispositif à crochet (9) au plancher arrière (6) mais aussi un organe de manoeuvre du dispositif à crochet (9) provoquant le basculement du panier (5) entre ladite position rabattue et ladite position basculée.

9. Caisse (1) de véhicule automobile selon l'une quelconque des revendications 1 à 8, **caractérisée en ce que** l'aile (21) est intégrée de fabrication à l'organe de renfort principal (17) lors de sa mise en conformation.

10. Véhicule automobile comportant une caisse (1) selon l'une quelconque des revendications 1 à 9.

## Patentansprüche

1. Karosserie (1) eines Kraftfahrzeugs, zumindest ein hinteres Bodenblech (6) umfassend, wobei die besagte Karosserie (1) versehen ist:
-) mit einem Korb (5) zur Ablage eines Reserverades, der unter der Karosserie (1) angeordnet ist, wobei der besagte Korb (5) schwenkbar an der Karosserie (1) montiert ist, indem er zwischen einer zur Unterseite des hinteren Bodenblechs (6) hin zusammengeklappten Position und einer geschwenkten Position geschwenkt werden kann, in der das Reserverad von außerhalb der Karosserie (1) aus erreichbar ist, wobei der Korb (5) in der besagten zusammengeklappten Position durch eine Hakenvorrichtung (9) gehalten wird, die durch eine Haltestange (10) an dem hinteren Bodenblech (6) befestigt ist, die an dem einen seiner Enden mit der Hakenvorrichtung (9) verbunden ist, und sich an ihrem anderen Ende axial anhand eines Ansatzes (14) der Haltestange (10) an der Oberseite des hinteren Bodenblechs (6) anlegt, das von der Haltestange (10) durchquert wird,
-) mit zumindest einer Heckklappe (4), die zwischen einer Öffnungsposition, die einen Zugriff von außerhalb der Karosserie (1) aus auf ein hinteres Fach (2) der Karosserie (1) freigibt, und einer Schließposition bewegt werden kann, in der die Heckklappe (4) das besagte hintere Fach (2) verschließt, wobei die Heckklappe (4) anhand eines Schlosses in der Schließposition an der Karosserie (1) festgehalten wird, das eine Schlossraste (7) umfasst, die an der Oberseite des hinteren Bodenblechs (6) eingesetzt ist, sowie einen Schlossbügel (8), der an der Heckklappe (4) eingesetzt ist, wobei die Schlossraste (7) anhand eines Verstrebungsteils (17) an der Oberseite des hinteren Bodenblechs (6) eingesetzt ist, das als Hauptverstrebungsteil qualifiziert wird, in einer im Allgemeinen flachen Ausdehnung, und in seiner allgemeinen Ausdehnungsebene an dem hinteren Bodenblech (6) befestigt,
**dadurch gekennzeichnet, dass** das Hauptverstrebungsteil (17) einen Flügel (21) enthält, an dem sich die Haltestange (10) anhand des besagten Ansatzes (14) axial anlegt, wobei der besagte Flügel (21) zur Befestigung der Hakenvorrichtung (9) an der Karosserie (1) ein Verstrebungsteil (20) bildet, das als Sekundärverstrebungsteil qualifiziert wird.

2. Karosserie (1) eines Kraftfahrzeugs nach Anspruch 1, **dadurch gekennzeichnet, dass** der Flügel (21) in einer allgemeinen Ausdehnungsebene des Hauptverstrebungsteils (17), in der Verlängerung eines Sockels (18) angeordnet ist, auf dem die Schlossraste (7) befestigt ist.

3. Karosserie (1) eines Kraftfahrzeugs nach Anspruch 2, **dadurch gekennzeichnet, dass**, da das Hauptverstrebungsteil (17) in einer Zelle (22) des hinteren Bodenblechs (6) aufgenommen ist, und unter Annahme der allgemeinen Ausdehnungsebene des Hauptverstrebungsteils (17), die Höhenabmessung des Sockels (18) größer ist, als Höhenabmessung des Flügels (21).

4. Karosserie (1) eines Kraftfahrzeugs nach Anspruch 3, **dadurch gekennzeichnet, dass** die Oberseite des Sockels (18), welche die Schlossraste (7) aufnimmt, und die Oberseite des Flügels (21), welche den Ansatz (14) der Haltestange (10) aufnimmt, in etwa komplanar sind.

5. Karosserie (1) eines Kraftfahrzeugs nach Anspruch 4, **dadurch gekennzeichnet, dass** der Flügel (21) eine Vertiefung (23) umfasst, im Inneren derer der Ansatz (14) der Haltestange (10) untergebracht ist.

6. Karosserie (1) eines Kraftfahrzeugs nach Anspruch 4, **dadurch gekennzeichnet, dass** die besagte Zelle (22) den Sockel (18) an ihrem Boden aufnimmt und einen Absatz zur Aufnahme des Flügels (21) umfasst.

7. Karosserie (1) eines Kraftfahrzeugs nach einem der Ansprüche 1 bis 6, **dadurch gekennzeichnet, dass** die Haltestange (10) durch Verschrauben mit der Hakenvorrichtung (9) verbunden ist und ein Antriebselement (15) umfasst, das sich um sich selbst dreht, und an dem besagten Ansatz (14) angeordnet ist, und vom Inneren des besagten hinteren Faches (2) aus erreichbar ist.

8. Karosserie (1) eines Kraftfahrzeugs nach Anspruch 7, **dadurch gekennzeichnet, dass** die Haltestange (10) nicht nur ein Befestigungselement für die Hakenvorrichtung (9) an dem hinteren Bodenblech (6) darstellt, sondern auch ein Element zur Handhabung der Hakenvorrichtung (9), die zu einem Schwenk des Korbes (5) zwischen der besagten zusammengeklappten Position und der besagten geschwenkten Position führt.

9. Karosserie (1) eines Kraftfahrzeugs nach einem der Ansprüche 1 bis 8, **dadurch gekennzeichnet, dass** der Flügel (21) bei seiner Gestaltung im Rahmen der Fertigung in das Hauptverstrebungsteil (17) integriert wird.

10. Kraftfahrzeug, eine Karosserie (1) nach einem der Ansprüche 1 bis 9 umfassend.

## Claims

1. Motor-vehicle body (1) comprising at least one rear floor (6), said body (1) being provided with:
-) a pan (5) for storing a spare wheel disposed under the body (1), said pan (5) being mounted pivotally on the body (1) while being able to tilt between a position folded towards the bottom face of the rear floor (6) and a tilted position in which the spare wheel is accessible from the outside of the body (1), the pan (5) being held in said folded position by a hook device (9) fixed to the rear floor (6) by an anchoring rod (10) connected at one of its ends to the hook device (9) and bearing axially at its other end, by means of a shoulder (14) on the anchoring rod (10), against the top face of the rear floor (6) through which the anchoring rod (10) passes;
-) at least one rear hatch (4) able to move between an open position, allowing access from the outside of the body (1) to a rear compartment (2) of the body (1), and a closed position in which the rear hatch (4) closes said rear compartment (2), the rear hatch (4) being held on the body (1) in the closed position by means of a lock comprising a keeper (7) located on the top face of the rear floor (6) and a latch (8) located on the rear hatch (4), the keeper (7) being installed on the top face of the rear floor (6) by means of a reinforcement (17), termed the main reinforcement, with roughly planar extension and fixed to the rear floor (6) in its general extension plane,
**characterised in that** the main reinforcement (17) includes a flange (21) against which the anchoring rod (10) bears axially by means of said shoulder (14), said flange (21) forming a reinforcement (20), termed the secondary reinforcement, for fixing the hook device (9) to the body (1).

2. Motor-vehicle body (1) according to claim 1, **characterised in that** the flange (21) is provided, in the general extension plane of the main reinforcement (17), in line with a pedestal (18) on which the keeper (7) is fixed.

3. Motor-vehicle body (1) according to claim 2, **characterised in that**, the main reinforcement (17) being housed in a recess (22) in the rear floor (6) and, considering the general extension plane of the main reinforcement (17), the dimension in height of the pedestal (18) is greater than the dimension in height of the flange (21).

4. Motor-vehicle body (1) according to claim 3, **characterised in that** the top face of the pedestal (18) receiving the keeper (7) and the top face of the flange (21) receiving the shoulder (14) of the anchoring rod (10) are substantially coplanar.

5. Motor-vehicle body (1) according to claim 4, **characterised in that** the flange (21) comprises a cavity (23) inside which the shoulder (14) of the anchoring rod (10) is housed.

6. Motor-vehicle body (1) according to claim 4, **characterised in that** said recess (22) receives the pedestal (18) at its bottom and comprises a bearing for receiving the flange (21).

7. Motor-vehicle body (1) according to any of claims 1 to 6, **characterised in that** the anchoring rod (10) is connected by screwing to the hook device (9) and comprises a drive member (15) rotating on itself, provided on said shoulder (14) while being accessible from the inside of said rear compartment (2).

8. Motor-vehicle body (1) according to claim 7, **characterised in that** the anchoring rod (10) constitutes not only a member for fixing the hook device (9) to the rear floor (6) but also a member for manoeuvring the hook device (9) causing the tilting of the pan (5) between said folded position and said tilted position.

9. Motor-vehicle body (1) according to any of claims 1 to 8, **characterised in that** the flange (21) is integrated during manufacture with the main reinforcement (17) when it is formed.

10. Motor vehicle comprising a body (1) according to any of claims 1 to 9.
